# EUROPÄISCHE PATENTSCHRIFT

(11) **EP 2 704 813 B1**
(45) Veröffentlichungstag und Bekanntmachung des Hinweises auf die Patenterteilung: **21.10.2015**
(21) Anmeldenummer: 12720136.6
(22) Anmeldetag: 02.05.2012
(51) Int. Cl.: B01D 27/00

(54) **ENDSCHEIBE FÜR EIN FILTERELEMENT, ENTSPRECHENDES FILTERELEMENT UND ENTSPRECHENDER FILTER**
END DISK FOR A FILTER ELEMENT AND CORRESPONDING FILTER ELEMENT AND FILTER
PLAQUE D'EXTRÉMITÉ POUR UN ÉLÉMENT FILTRANT, ÉLÉMENT FILTRANT ET FILTRE CORRESPONDANTS

(30) Priorität: 03.05.2011 DE 102011100352
(43) Veröffentlichungstag der Anmeldung: 12.03.2014
(73) Patentinhaber: MANN + HUMMEL GMBH, 71638 Ludwigsburg (DE)
(72) Erfinder: CROISSANT, Horst, 76879 Hochstadt (DE); WOLF, Michael, 66539 Neunkirchen (DE)
(86) Internationale Anmeldenummer: PCT/EP2012/058045
(87) Internationale Veröffentlichungsnummer: WO 2012/150268

(56) Entgegenhaltungen:
- DE-A1- 4 443 581
- DE-A1-102009 024 699
- US-A1- 2010 294 707

## Beschreibung

### Technisches Gebiet

Die Erfindung betrifft einen Wechselfilter, ein Filterelement, insbesondere für einen Wechselfilter, sowie eine Endscheibe für ein Filterelement insbesondere zur Filtration von Kraftstoff oder Öl.

### Stand der Technik

Bekannt sind einzelne Filterelemente zum Austausch in einem Filtersystem mit einer Kunststoffendscheibe, die einen O-Ring kammert; z.B. in Fig. 1 der WO 2005/099861 A1 oder aus DE 10 2009 024 699 A1 oder DE 44 43 581 A1. Bekannt sind darüber hinaus Kunststoffendscheiben, die zur leichteren Herstellung für die Kammerung eines O-Rings zweiteilig gefertigt sind, z.B. aus der DE 202004006545 U1 oder der US 2010/294707 A1.

Aufgabe der Erfindung ist es einen Wechselfilter mit Kunststoffendscheibe mit gekammertem O-Ring bereitzustellen, sowie eine Kunststoffendscheibe, die leichter fertigbar ist sowie ein Filterelement mit einer solchen Kunststoffendscheibe und einen Wechselfilter mit einer derartigen Kunststoffendscheibe.

### Offenbarung der Erfindung

Gelöst wird die Aufgabe durch eine Kunststoffendscheibe gemäß den Ansprüchen 1 bis 8, ein Filterelement gemäß Anspruch 9 und einen Wechselfilter gemäß Anspruch 10.

Die erfindungsgemäße Kunststoffendscheibe für ein Filterelement umfasst bevorzugt einen scheibenförmigen Bereich zur stirnseitigen Abdichtung eines sterngefalteten Falt-enbalgs und einen hohlzylindrischen Bereich, der sich senkrecht zum scheibenförmigen Bereich in eine erste Richtung erstreckt.

Bevorzug ist die Innenseite des hohlzylindrischen Bereichs dabei zur radialen Abdichtung der Kunststoffendscheibe an einem Aufnahmedorn mittels eines O-Rings ausgebildet ist, wobei an der Innenseite des hohlzylindrischen Bereichs sich radial in den hohlzylindrischen Bereich erstreckende Nasen zur Kammerung eines O-Rings befinden, wobei sich mindestens zwei Nasen auf einer zum scheibenförmigen Bereich parallelen ersten Ebene und mindestens zwei Nasen auf einer in axialer Richtung des hohlzylindrischen Bereiches zur ersten Ebene beabstandeten zweiten Ebene befinden. Die Ebenen und die in ihnen angeordneten Nasen sind dabei bevorzugt axial so beabstandet, dass zwischen den Ebenen ein O-Ring aufnehmbar ist.

Die Nasen der ersten Ebene sind insbesondere derart in Umfangsrichtung gegenüber den Nasen der zweiten Ebene versetzt sind, dass sich die Nasen der ersten Ebene, wenn sie axial auf die zweite Ebene projiziert sind, und die Nasen der zweiten Ebene nicht überlappen.

Dadurch kann die Endscheibe einfach im Spritzgussverfahren hergestellt werden.

Die Nasen der ersten Ebene sind damit insbesondere in Umfangsrichtung in anderen Kreisringsegmenten angeordnet als die Nasen der zweiten Ebene. Jede Nase der ersten Ebene liegt damit insbesondere in einem Kreisringsegment, in welchem in der zweiten Ebene keine Nase angeordnet ist.

Anders ausgedrückt ist es bevorzugt, dass Nasen in der ersten Ebene in Umfangsrichtung dort angeordnet sind, wo sich eine Lücke zwischen zwei Nasen der zweiten Ebene befindet und umgekehrt.

In einer bevorzugten Ausführungsform folgt in Umfangsrichtung auf eine Nase in der ersten Ebene, welche in einem ersten Kreisringsegment angeordnet ist, eine Nase in der zweiten Ebene, welche in einem unmittelbar an das erste Kreisringsegment angrenzenden zweiten Kreisringsegment angeordnet ist.

Besonders bevorzugt folgt auf diese Weise zumindest in Teilabschnitten des Umfangs oder insbesondere über den gesamten Umfang jeweils eine Nase in der ersten Ebene auf eine Nase in der zweiten Ebene und umgekehrt.

In einer bevorzugten Ausführungsform formen die Nasen der ersten Ebene auf die zweite Ebene projiziert und die Nasen der zweiten Ebene zusammen genommen einen Kreisring aus. Auf diese Weise kann ein O-Ring zwischen den Nasen der beiden Ebenen bestmöglich axial abgestützt oder gehalten werden.

In einer bevorzugten Ausführungsform sind mindestens 5 Nasen der ersten Ebene und mindestens fünf Nasen der zweiten Ebene vorhanden, damit eine gleichmäßigere Kammerung des O-Rings ermöglicht wird.

In einer bevorzugten Ausführungsform haben die Nasen der ersten Ebene die gleiche Form wie die Nasen der zweiten Ebene.

In einer bevorzugten Ausführungsform haben die Nasen der ersten Ebene eine andere Form als die Nasen der zweiten Ebene.

In einer bevorzugten Ausführungsform umfasst die Kunststoffendscheibe einen Abstützungsbereich, der sich entgegen der Richtung des hohlzylindrischen Bereichs erstreckt.

In einer bevorzugten Ausführungsform ist die Kunststoffendscheibe einstückig ausgeführt.

In einer bevorzugten Ausführungsform ist ein O-Ring zur Abdichtung gegenüber einem Aufnahmedorn zwischen den Nasen der ersten Ebene und den Nasen der zweiten Ebene angeordnet.

Die Erfindung betrifft ferner ein Filterelement, umfassend einen sterngefalteten Faltenbalg sowie eine Endscheibe gemäß der Erfindung.

Die Erfindung betrifft weiter einen Wechselfilter, umfassend eine Gewindeplatte zur Befestigung des Wechselfilters an einem Filterkopf, einen metallischen Außenmantel und einen Dichtungsträger, wobei der Außenmantel mit dem Dichtungsträger derart verbördelt ist, dass die Gewindeplatte unlösbar mit dem Außenmantel verbunden ist, sowie ein Filterelement, insbesondere mit einem sterngefaltetem Faltenbalg, mit einer zur Gewindeplatte gerichteten erfindungsgemäßen Kunststoffendscheibe, die einen O-Ring kammert.

In einer Ausführungsform hat die Gewindeplatte einen zentralen Durchgang mit einem Innengewinde, der insbesondere einen reinseitigen Auslass für gefiltertes Fluid bildet, und mehrere nichtzentrale Durchgänge, durch welche zu filterndes Fluid in den Wechselfilter einströmen kann.

Fluidtechnisch befindet sich bevorzugt zwischen dem zentralen Durchgang und den nichtzentralen Durchgängen ein Filterelement, sodass durch den zentralen Durchgang Flüssigkeit, z.B. Kraftstoff oder Öl, zum Filterelement hinströmen kann, durch das Filterelement hindurch strömen kann und durch die nichtzentralen Durchgänge wieder aus dem Wechselfilter abströmen kann. Die umgekehrte Flussrichtung ist ebenfalls möglich.

Der Wechselfilter hat in einer Ausführungsform einen metallischen Außenmantel, der mit einem Dichtungsträger derart verbördelt ist, dass die Gewindeplatte unlösbar mit dem Außenmantel verbunden ist. An dem Dichtungsträger befindet sich bevorzugt eine Dichtung, z.B. ein O-Ring oder eine Dichtung mit rechteckigem Querschnitt, die dazu dient, den Wechselfilter beim Anschrauben an den Filterkopf insbesondere axial gegen die Umgebung abzudichten.

Das Filterelement ist insbesondere mit einem sterngefaltetem Faltenbalg und mit einer zur Gewindeplatte gerichteten Kunststoffendscheibe ausgeführt. Die Endscheibe kammert dabei bevorzugt einen O-Ring zwischen den Nasen der ersten Ebene und den Nasen der zweiten Ebene.

In einer Ausführungsform schlägt das Filterelement mit der Kunststoffendscheibe an der Gewindeplatte an und wird mit einer Feder im Wechselfilter gegen die Gewindeplatte gedrückt.

In einer bevorzugten Ausführungsform ist die Innenseite des hohlzylindrischen Bereichs zur radialen Abdichtung der Kunststoffendscheibe an einem Aufnahmedorn eines Filterkopfes oder ähnlichem durch einen O-Ring ausgebildet. Beim Einbau des Wechselfilters kann dieser Aufnahmedorn in den Wechselfilter einstoßen oder hineinragen.

In einer bevorzugten Ausführungsform werden durch die Abdichtung am Aufnahmedorn im Wechselfilter die Roh- und die Reinseite des Filterelements getrennt.

Durch die Trennung mit Hilfe des O-Rings kann der Anschlag des Filterelements mit der Kunststoffendscheibe an der Gewindeplatte, wie in einer weiteren bevorzugten Ausführung vorgesehen, nichtdichtend ausgeführt sein und braucht z.B. nicht verklebt zu werden.

### Kurze Beschreibung der Zeichnungen

- Fig. 1: zeigt einen Wechselfilter mit einem Filterelement
- Fig. 2: zeigt eine Endscheibe eines Filterelements
- Fig. 3: zeigt den Schnitt durch die Endscheibe von Fig. 2

### Ausführungsform(en) der Erfindung

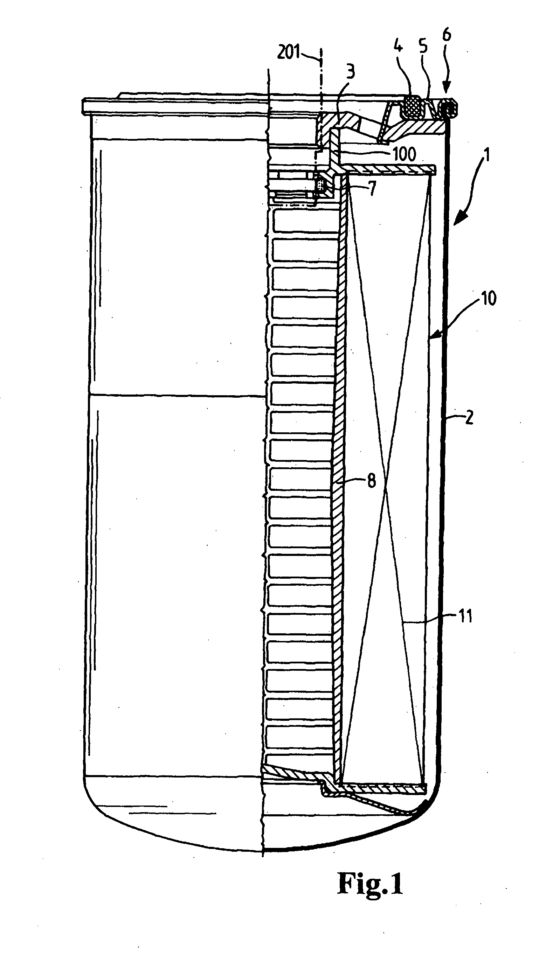

Fig. 1 zeigt einen Wechselfilter 1 mit einer Gewindeplatte 3 zur Befestigung des Wechselfilters 1 an einem Filterkopf. Die Gewindeplatte 3 hat einen zentralen Durchgang mit einem Innengewinde. Weiterhin hat die Gewindeplatte 3 mehrere nichtzentrale Durchgänge. Fluidtechnisch befindet sich zwischen dem zentralen Durchgang und den nichtzentralen Durchgängen ein Filterelement 10, sodass durch den zentralen Durchgang Flüssigkeit, z.B. Kraftstoff oder Öl, zum Filterelement 10 hinströmen kann, durch das Filterelement 10 hindurchströmen kann und durch die nichtzentralen Durchgänge wieder aus dem Wechselfilter abströmen kann. Die umgekehrte Flussrichtung ist ebenfalls möglich. Der Wechselfilter hat einen metallischen Außenmantel 2, der mit einem Dichtungsträger 5 derart verbördelt 6 ist, dass die Gewindeplatte 3 unlösbar mit dem Außenmantel 2 verbunden ist. An dem Dichtungsträger befindet sich eine Dichtung 4, z.B. ein O-Ring oder eine Dichtung mit rechteckigem Querschinitt, die dazu dient, den Wechselfilter beim Anschrauben an den Filterkopf gegen die Umgebung abzudichten. Das Filterelement 10 ist mit einem sterngefaltetem Faltenbalg 11 und mit einer zur Gewindeplatte 3 gerichteten Kunststoffendscheibe 100 ausgeführt. Die Endscheibe kammert einen O-Ring 7. Das Filterelement 10 schlägt mit der Kunststoffendscheibe 100 an der Gewindeplatte 3 an und wird mit einer Feder im Wechselfilter 1 gegen die Gewindeplatte 3 gedrückt.

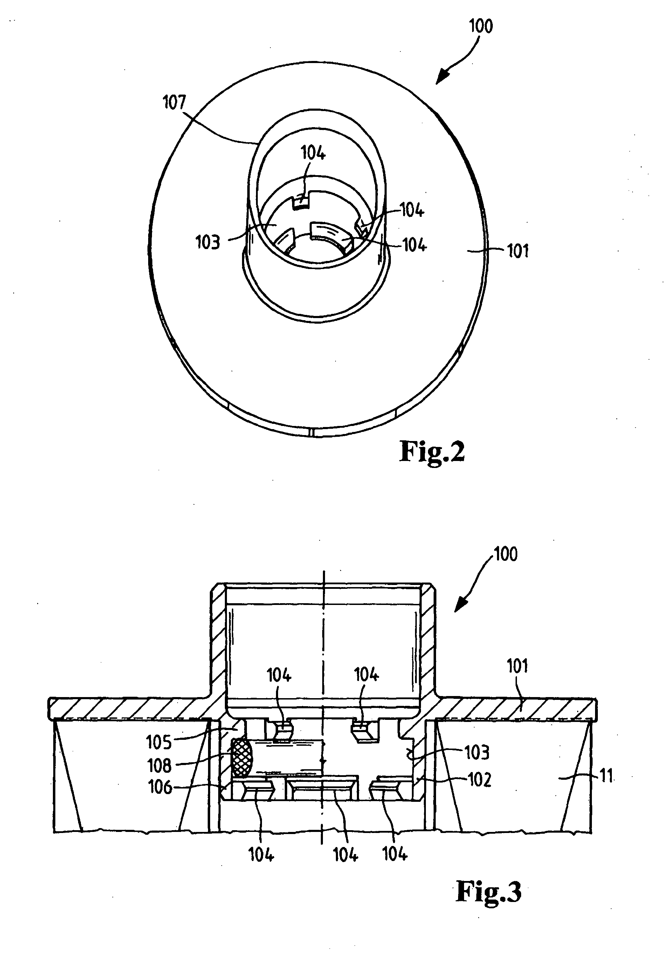

Die Fig. 2 und 3 zeigen eine bevorzugte Kunststoffendscheibe des Wechselfilters aus Fig. 1 im Detail und als Schnittdarstellung. Die Kunststoffendscheibe 100 umfasst einen scheibenförmigen Bereich 101 zur stirnseitigen Abdichtung eines sterngefalteten Faltenbalgs 11. Ein hohlzylindrischen Bereich 102, erstreckt sich senkrecht zum scheibenförmigen Bereich 101. Die Innenseite 103 des hohlzylindrischen Bereichs 102 ist zur radialen Abdichtung der Kunststoffendscheibe 100 an einem Aufnahmedorn durch einen O-Ring 108 ausgebildet. Beim Einbau des Wechselfilters 1 stößt dieser Aufnahmedorn in den Wechselfilter. Durch die Abdichtung am Aufnahmedorn 201 werden im Wechselfilter die Roh- und die Reinseite des Filterelements 10 getrennt. Durch die Trennung mit Hilfe des O-Rings kann der Anschlag des Filterelements mit der Kunststoffendscheibe 100 an der Gewindeplatte 3 nichtdichtend ausgeführt sein und braucht z.B. nicht verklebt zu werden. An der Innenseite 103 des hohlzylindrischen Bereichs 102 erstrecken sich radial in den hohlzylindrischen Bereich 102 hinein Nasen 104 zur Kammerung eines O-Rings. Mindestens zwei Nasen 104 befinden sich auf einer zum scheibenförmigen Bereich 101 parallelen ersten Ebene 105 und mindestens zwei Nasen 104 auf einer in axialer Richtung des hohlzylindrischen Bereiches 102 zur ersten Ebene 105 beabstandeten zweiten Ebene 106. Die Nasen 104 der ersten Ebene 105 sind gegenüber den Nasen der zweiten Ebene 106 derart gegeneinander versetzt, dass sich die Nasen 104 der ersten Ebene 105 axial auf die zweite Ebene 106 projiziert und die Nasen 104 der zweiten Ebene 106 nicht überlappen. Hierdurch wird eine hinterschnittfreie Konstruktion der Kunststoffendscheibe 100 ermöglicht, sodass die Kunststoffendscheibe 100 gut im Spritzgussverfahren hergestellt werden kann.

## Patentansprüche

1. Kunststoffendscheibe (100) für ein Filterelement (10), umfassend
a. einen scheibenförmigen Bereich (101) zur stirnseitigen Abdichtung eines sterngefalteten Faltenbalgs (11),
b. einen hohlzylindrischen Bereich (102), der sich senkrecht zum scheibenförmigen Bereich (101) in eine erste Richtung erstreckt, wobei
i. die Innenseite (103) des hohlzylindrischen Bereichs (102) zur radialen Abdichtung der Kunststoffendscheibe (100) an einem Aufnahmedorn durch einen O-Ring ausgebildet ist und
ii. an der Innenseite (103) des hohlzylindrischen Bereichs (102) sich radial in den hohlzylindrischen Bereich (102) erstreckende Nasen (104) zur Kammerung eines O-Rings befinden, wobei
1. sich mindestens zwei Nasen (104) auf einer zum scheibenförmigen Bereich (101) parallelen ersten Ebene (105) und mindestens zwei Nasen (104) auf einer in axialer Richtung des hohlzylindrischen Bereiches (102) zur ersten Ebene (105) beabstandeten zweiten Ebene (106) befinden
2. wobei die Nasen (104) der ersten Ebene (105) gegenüber den Nasen der zweiten Ebene (106) derart gegeneinander versetzt sind, dass sich die Nasen (104) der ersten Ebene (105) axial auf die zweite Ebene (106) projiziert und die Nasen (104) der zweiten Ebene (106) nicht überlappen, um eine hinterschnittfreie Konstruktion der Kunststoffendscheibe zu ermöglichen.

2. Kunststoffendscheibe (100) nach Anspruch 1, wobei die Nasen (104) der ersten Ebene (105) auf die zweite Ebene (106) projiziert und die Nasen (104) der zweiten Ebene (106) einen Kreisring ausformen.

3. Kunststoffendscheibe (100) nach einem der vorhergehenden Ansprüche, wobei mindestens 5 Nasen (104) der ersten Ebene (105) und mindestens fünf Nasen (104) der zweiten Ebene vorhanden sind, damit eine gleichmäßigere Kammerung des O-Rings ermöglicht wird.

4. Kunststoffendscheibe (100) nach einem der vorhergehenden Ansprüche, wobei die Nasen (104) der ersten Ebene (105) die gleiche Form wie die Nasen (104) der zweiten Ebene (106) haben.

5. Kunststoffendscheibe (100) nach einem der Ansprüche 1 bis 3, wobei die Nasen (104) der ersten Ebene (105) eine andere Form als die Nasen (104) der zweiten Ebene (106) haben.

6. Kunststoffendscheibe (100) nach einem der vorhergehenden Ansprüche, weiterhin umfassend einen Abstützungsbereich (107), der sich entgegen der Richtung des hohlzylindrischen Bereichs (102) erstreckt.

7. Kunststoffendscheibe (100) nach einem der vorhergehenden Ansprüche, wobei die Kunststoffendscheibe einstückig ausgeführt ist.

8. Kunststoffendscheibe nach einem der vorhergehenden Ansprüche, **dadurch gekennzeichnet, dass** ein O-Ring zur Abdichtung gegenüber einem Aufnahmedorn zwischen den Nasen der ersten Ebene und den Nasen der zweiten Ebene angeordnet ist.

9. Filterelement (10) umfassend einen sterngefalteten Faltenbalg (11) sowie eine Kunststoffendscheibe gemäß einem der vorhergehenden Ansprüche.

10. Wechselfilter (1) umfassend
a. eine Gewindeplatte (3) zur Befestigung des Wechselfilters (1) an einem Filterkopf,
b. einen metallischen Außenmantel (2), der mit einem Dichtungsträger (5) derart verbördelt ist, dass die Gewindeplatte (3) unlösbar mit dem Außenmantel (2) verbunden ist
c. ein Filterelement (10) gemäß Anspruch 9, mit einem sterngefaltetem Faltenbalg (11) mit einer zur Gewindeplatte (3) gerichteten Kunststoffendscheibe (100) gemäß einem der Ansprüche 1 bis 8, die einen O-Ring kammert.

## Claims

1. Plastic end plate (100) for a filter element (10), comprising
a. a disk-shaped section (101) for the frontal sealing of a star-pleated bellows (11),
b. a hollow-cylindrical section (102), which extends perpendicularly to the disk-shaped section (101) in a first direction, wherein
i. the interior side (103) of the hollow-cylindrical section (102) for the radial sealing of the plastic end plate (100) at a receiving mandrel is realized by means of an O-ring and
ii. lugs (104) radially extending into the hollow-cylindrical section (102) for sandwiching an O-ring are placed on the interior side (103) of the hollow-cylindrical section (102), wherein
1. at least two lugs (104) are placed on a first plane (105) parallel to the disk-shaped section (101) and at least two lugs (104) on a second plane (106) in axial direction of the hollow-cylindrical section (102) spaced apart from the first plane (105),
2. wherein the lugs (104) of the first plane (105) are offset from one another relative to the lugs of the second plane (106) in such a way that the lugs (104) of the first plane (105) are axially projected onto the second plane (106) and do not overlap the lugs (104) of the second plane (106) in order to enable an undercut-free construction of the plastic end plate.

2. Plastic end plate (100) according to claim 1, wherein the lugs (104) of the first plane (105) are projected onto the second plane (106) and the lugs (104) of the second plane (106) form a circular ring.

3. Plastic end plate (100) according to one of the above claims, wherein at least 5 lugs (104) of the first plane (105) and at least five lugs (104) of the second plane are provided in order to enable a more uniform sandwiching of the O-ring.

4. Plastic end plate (100) according to one of the above claims, wherein the lugs (104) of the first plane (105) have the same shape as the lugs (104) of the second plane (106).

5. Plastic end plate (100) according to one of the claims 1 to 3, wherein the lugs (104) of the first plane (105) have a different shape than the lugs (104) of the second plane (106).

6. Plastic end plate (100) according to one of the above claims, comprising furthermore a support section (107) which extends opposite to the direction of the hollow-cylindrical section (102).

7. Plastic end plate (100) according to one of the above claims, wherein the plastic end plate is designed as one piece.

8. Plastic end plate according to one of the above claims, **characterized in that** an O-ring for sealing, opposite to a receiving mandrel, is disposed between the lugs of the first plane and the lugs of the second plane.

9. Filter element (10) comprising a star-pleated bellows (11) as well as a plastic end plate according to one of the above claims.

10. Spin-on filter (1) comprising
a. a threaded plate (3) for attaching the spin-on filter (1) to the filter head,
b. a metallic outer wall (2) which is flanged with a seal carrier (5) in such a way that the threaded plate (3) is undetachably connected with the outer wall (2),
c. a filter element (10) according to claim 9, with a star-pleated bellows (11) with a plastic end plate (100) directed towards the threaded plate (3) according to one of the claims 1 to 6 which sandwiches an O-ring.

## Revendications

1. Disque d'extrémité en plastique (100) pour un élément filtrant (10), comprenant
a. une zone en forme de disque (101) pour l'étanchéité frontale d'un soufflet (11) plié en étoile,
b. une zone en forme de cylindre creux (102) qui s'étend verticalement par rapport à la zone en forme de disque (101) dans une première direction,
i. la face intérieure (103) de la zone en forme de cylindre creux (102) pour l'étanchéité radiale du disque d'extrémité en plastique (100) étant formée par un joint torique sur une broche de support et
ii. des ergots (104) s'étendant en sens radial dans la zone en forme de cylindre creux (102) se trouvant sur la face intérieure (103) de la zone en forme de cylindre creux (102) en vue de l'enfermement d'un joint torique,
1. au moins deux ergots (104) se trouvant sur un premier plan (105) parallèle à la zone en forme de disque (101) et au moins deux ergots (104) se trouvant sur un deuxième plan (106) espacé du premier plan (105) en sens axial de la zone en forme de cylindre creux (102),
2. les ergots (104) du premier plan (105) étant décalés par rapport aux ergots du deuxième plan (106) de sorte que les ergots (104) du premier plan (105) soient projetés en sens axial sur le deuxième plan (106) et ne recouvrent pas les ergots (104) du deuxième plan (106) afin de rendre possible une construction exempte de contre-dépouille du disque d'extrémité en plastique.

2. Disque d'extrémité en plastique (100) selon la revendication 1, les ergots (104) du premier plan (105) étant projetés sur le deuxième plan (106) et les ergots (104) du deuxième plan (106) formant un anneau circulaire.

3. Disque d'extrémité en plastique (100) selon l'une des revendications précédentes, au moins 5 ergots (104) du premier plan (105) et au moins cinq ergots (104) du deuxième plan étant prévus pour rendre possible un enfermement plus régulier du joint torique.

4. Disque d'extrémité en plastique (100) selon l'une des revendications précédentes, les ergots (104) du premier plan (105) ayant la même forme que les ergots (104) du deuxième plan (106).

5. Disque d'extrémité en plastique (100) selon l'une des revendications 1 à 3, les ergots (104) du premier plan (105) ayant une forme différente de la forme des ergots (104) du deuxième plan (106).

6. Disque d'extrémité en plastique (100) selon l'une des revendications précédentes, comprenant également une zone de soutien (107) qui s'étend dans la direction opposée à celle de la zone en forme de cylindre creux (102).

7. Disque d'extrémité en plastique (100) selon l'une des revendications précédentes, le disque d'extrémité en plastique étant exécuté en un bloc.

8. Disque d'extrémité en plastique selon l'une des revendications précédentes, **caractérisé en ce qu'**un joint torique est disposé à des fins d'étanchéité, en face d'une broche de support, entre les ergots du premier plan et les ergots du deuxième plan.

9. Élément filtrant (10) comprenant un soufflet (11) plié en étoile et un disque d'extrémité en plastique selon l'une des revendications précédentes.

10. Filtre interchangeable (1) comprenant
a. une plaque filetée (3) pour fixer le filtre interchangeable (1) à une tête de filtre,
b. une enveloppe extérieure (2) métallique qui est sertie avec un porte-joint (5) de sorte que la plaque filetée (3) soit reliée de façon inamovible à l'enveloppe extérieure (2),
c. un élément filtrant (10) selon la revendication 9, avec un soufflet (11) plié en étoile avec un disque d'extrémité en plastique (100) dirigé vers la plaque filetée (3) selon l'une des revendications 1 à 8, lequel enferme un joint torique.
